# FASCICULE DE BREVET EUROPEEN

(11) **EP 3 178 797 B1**
(45) Date de publication et mention de la délivrance du brevet: **09.10.2019**
(21) Numéro de dépôt: 16203069.6
(22) Date de dépôt: 09.12.2016
(51) Int. Cl.: C04B 28/02, C04B 28/06, C04B 28/08, C04B 24/26, C04B 16/06, C04B 111/20, C04B 111/34

(54) **MATÉRIAU DE CONSTRUCTION DUCTILE**
DUKTILES BAUMATERIAL
DUCTILE CONSTRUCTION MATERIAL

(30) Priorité: 10.12.2015 FR 1562101
(43) Date de publication de la demande: 14.06.2017
(73) Titulaire: Vicat, 92095 Paris La Défense (FR)
(72) Inventeur: CHABRELIE, Aude, 2575 Gerolfingen (CH); MAC DONALD, David, 3250 Lyss (CH); PETIT, Agnès, 1753 Villars-sur-Glâne (CH)
(74) Mandataire: Agasse, Stéphane

(56) Documents cités:
- DE-A1-102008 043 988
- FR-A1- 2 842 190
- US-A1- 2007 125 276
- US-A1- 2014 080 942

## Description

La présente invention a pour objet une nouvelle composition cimentaire permettant la préparation d'un matériau de construction présentant une ductilité améliorée.

La fabrication des liants hydrauliques, et notamment celle des ciments, consiste essentiellement en une calcination d'un mélange de matières premières judicieusement choisies et dosées, aussi désigné par le terme de « cru ». La cuisson de ce cru donne un produit intermédiaire, le clinker, qui, broyé avec d'éventuels ajouts minéraux, donnera du ciment.

Le type de ciment fabriqué dépend de la nature et des proportions des matières premières ainsi que du procédé de cuisson. On distingue plusieurs types de ciments : les ciments Portland (qui représentent la très grande majorité des ciments produits dans le monde), les ciments alumineux (ou d'aluminate de calcium), les ciments prompts naturels, les ciments sulfo-alumineux, les ciments sulfo-bélitiques et d'autres variétés intermédiaires.

Le ciment peut par la suite être mélangé avec du sable fin pour préparer du mortier ou avec du sable fin et des granulats pour préparer du béton.

Pour certaines utilisations, notamment lorsque les objets ou ouvrages finalement préparés sont soumis à des chocs, des impacts ou des vibrations, il est nécessaire d'améliorer la ductilité du ciment, du coulis, du mortier ou du béton utilisé.

Ainsi, dans le passé, des compositions de type béton à ultra-hautes performances (BUHP), béton fibré à ultra-hautes performances (BFUHP), mortier technique de type mortier chape ou mortier colle possédant une ductilité améliorée ont été mises au point. L'ajout de latex et/ou de fibres synthétiques (généralement des fibres métalliques en particulier en acier ou des fibres de polypropylène ou des fibres d'alcool polyvinylique) aux compositions de coulis, mortiers ou bétons afin d'améliorer leur ductilité a notamment été décrit.

Le latex est un matériau élastique élaboré à partir de la sève de l'hévéa, ou synthétisé par polymérisation. Il est utilisé dans de nombreux domaines du fait de ses nombreuses propriétés : collant (tant qu'il n'est pas vulcanisé), rebondissant, flexible, très résistant et étirable presque à volonté).

La demande de brevet américaine US 2002/0132881 décrit une composition comprenant du ciment, du chlorure de calcium et jusqu'à 15% en poids de latex par rapport au poids de ciment. La présence simultanée de latex et de chlorure de calcium est décrite comme améliorant les propriétés mécaniques, notamment l'élasticité, matériau préparé à partir du ciment.

La demande de brevet internationale WO-A-00/27774 décrit quant à elle une composition de béton comprenant notamment 100 parties (en poids) de ciment Portland et 5 à 20 parties (en poids) de latex ainsi que du caoutchouc. Le béton ainsi préparé est présenté comme possédant une meilleure flexibilité et une meilleure imperméabilité.

La demande de brevet allemande DE10 2008 043988 décrit une composition cimentaire comprenant par exemple 6.1 ou 7.2 % de fibres de cellulose ou de coton et 39.50 ou 50 % d'un polymère redispersible et son utilisation pour la préparation de matériau composite isolant ou de compositions adhésives.

Cependant, des tests conduits en vue d'évaluer la ductilité des matériaux préparés à partir de mortiers contenant de telles proportions de latex révèlent que ceux-ci ne possèdent pas une résistance aux chocs suffisante pour pouvoir être utilisés pour préparer des objets ou des ouvrages soumis à des chocs, des impacts ou des vibrations.

En outre, l'ajout de latex dans des proportions plus importantes en vue d'améliorer la ductilité du matériau finalement préparé dégrade de manière significative les propriétés mécaniques de celui-ci à moyen et long termes.

Enfin, les fibres synthétiques généralement ajoutées dans les bétons fibrés à ultra-haute performance sont de dimensions trop importantes (16 mm de longueur en moyenne et 30 µm de diamètre en moyenne) pour que le mélange puisse être utilisé pour des éléments tenant dans une main et avec une haute qualité esthétique, c'est-à-dire dénués de fibres visibles en surface. Cela pose notamment un problème lorsque l'on souhaite préparer de petits éléments de géométries fines et étroites, c'est-à-dire possédant de faibles espaces entre les bords de l'élément et/ou entre les bords et l'armature de l'élément.

A ce jour, il demeure donc intéressant d'identifier de nouvelles compositions cimentaires permettant la préparation de matériau de construction possédant une ductilité améliorée sans dégrader leur résistance mécanique à moyen et long termes ni l'esthétique de l'objet ou de l'ouvrage finalement préparé.

Or, il a maintenant été trouvé de façon tout à fait surprenante que l'ajout de certaines fibres, notamment de fibres végétales, dans les compositions cimentaires permet l'ajout de latex dans de plus grandes proportions, ce qui améliore la ductilité de l'objet ou de l'ouvrage finalement préparé, sans pour autant nuire à sa résistance mécanique à moyen et long termes ni à son esthétique du produit.

La présente invention a donc tout d'abord pour objet une composition cimentaire comprenant :
- du ciment ;
- plus de 20% en poids de latex par rapport au poids de ciment ; et
- de 0,4% à 4% en poids de fibre par rapport au poids de ciment, ladite fibre étant choisie parmi les fibres végétales, les fibres de carbone, les fibres de poly(p-phénylènetéréphtalamide), les fibres p-phénylène-2,6-benzobisoxazole, les fibres de caoutchouc, les fibres de nylon, les fibres de poly(téréphtalate d'éthylène) et/ou les fibres de polystyrène.

La composition cimentaire selon la présente invention permet la préparation de matériau de construction bénéficiant d'une meilleure ductilité permettant ainsi leur utilisation pour préparer des objets ou des ouvrages soumis à des chocs, des impacts ou des vibrations sans pour autant nuire à leur résistance mécanique à moyen et long termes ni à leur esthétique.

Dans le cadre de la présente invention :
- on entend par « composition cimentaire » tout liant hydraulique préparé à partir de ciment ;
- on entend par « ciment » tout ciment connu de l'homme du métier, notamment
   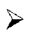 le CEM I ou ciment Portland, contenant au moins 95 % de clinker et au plus 5% de constituants secondaires ;
   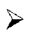 le CEM II A ou B ou Ciment Portland composé, contenant au moins 65% de clinker et au plus 35 % d'autres constituants tels que laitier de haut-fourneau, fumée de silice, pouzzolane naturelle, cendres volantes ou calcaires ;
   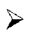 le CEM III A ou B ou ciment de haut-fourneau, contenant de 36% à 80% de laitier de haut-fourneau et de 20% à 64% de clinker ;
   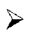 le CEM III C ou ciment de haut-fourneau contenant au moins 81% de laitier et de 5% à 19% de clinker ;
   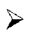 le CEM IV A ou B est un ciment de type pouzzolanique (connu sous l'appellation CPZ avant l'introduction de la NF EN 197-1) ;
   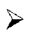 le CEM V A ou B ou ciment composé contenant de 20% à 64 % de clinker, de 18% à 50% de cendres volantes et de 18% à 50% de laitier de haut-fourneau ;
   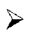 le ciment alumineux;
   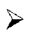 le ciment sulfo-alumineux; et
   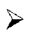 le ciment sulfo-bélitique ;
- on entend par « matériau de construction » un béton, un mortier ou un coulis, de préférence un mortier ou un béton, de façon tout à fait préférée un mortier ;
- on entend par « ductilité » la résistance aux chocs, aux impacts, à la flexion et/ou aux vibrations ;
- on entend par « latex » le latex naturel de l'hévéa ou le latex synthétique préparé par polymérisation, notamment les poudres de polymères redispersibles et/ou émulsions de polymères. Le latex selon la présente invention peut ainsi être sous forme de monopolymère (monolatex) et/ou de mélange de polymères (mélange de latex), lesdits polymères pouvant être choisis parmi la famille des alcènes en particulier des éthylènes ; des acétates en particulier des acétates de vinyl et/ou des éthers d'éthyle ; des esters en particulier des esters carboxyliques ; des polymères styréniques en particulier des styrènes-butadiènes ; des acides carboxyliques en particulier des carboxyles styrène-butadiène ; et/ou des polymères acryliques en particulier des acrylates. De façon tout à fait préférée, on entend par « latex » un liant polymère redispersible à base d'un homopolymère, d'un copolymère ou d'une combinaison de copolymère(s) et/ou d'homopolymère(s) choisi(s) parmi un copolymère d'acétate de vinyle et d'éthylène ; un copolymère butadiène-acrylonitrile ; un homopolymère d'acétate de vinyle ; un copolymère d'acétate de vinyle et de versatate de vinyle ; un copolymère d'acétate de vinyle, de versatate de vinyle et d'éthylène ; un copolymère acrylate ; un copolymère d'acétate de vinyle, de versatate de vinyle, d'éthylène et d'acrylate de butyle ; un copolymère de chlorure de vinyle et d'éthylène ; un copolymère d'ester de vinyle, d'éthylène et de méthyl-méthacrylate ; un copolymère d'acétate de vinyle, d'éthylène et d'ester de vinyle ; un copolymère d'ester de vinyle, d'éthylène et d'ester d'acide acrylique ; un copolymère de chlorure de vinyle, d'éthylène et d'acide laurique (laurate) de vinyle ; et un copolymère d'acétate de vinyle, de chlorure de vinyle et d'éthylène ;
- on entend par « fibre végétale » toute fibre d'origine végétale, en particulier les fibres essentiellement composée de cellulose, d'hémicellulose et/ou de lignines ;
- on entend par « superplastifiant » tout polymère de synthèse facilitant la mise en place du béton, permettant une réduction de la quantité d'eau de gâchage nécessaire et/ou augmentant l'imperméabilité et la résistance du béton durci. Comme exemple de polymères pouvant être utilisés comme superplastifiant on peut notamment citer :
   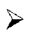 les sels sulfonés de polycondensés de naphtalène et de formaldéhyde, couramment appelés les polynaphtalènes sulfonates ou encore les superplastifiants à base de naphtalène ;
   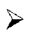 les sels sulfonés de polycondensés de mélamine et de formaldéhyde, appelés couramment les superplastifiants à base de mélamine ;
   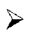 les lignosulfonates ayant de très faibles teneurs en sucre ;
   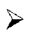 les polyacrylates ; et
   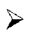 les produits à base d'acides polycarboxyliques ;
- on entend par « accélérateur de prise » tout agent classiquement utilisé comme adjuvant dans les compositions de béton ou de mortier en vue d'accélérer la prise et/ou le durcissement du liant et/ou d'augmenter les performances mécaniques du béton ou du mortier ;
- le « poly(p-phénylènetéréphtalamide) » désigne le PPD-T ou Kevlar ;
- le « p-phénylène-2,6-benzobisoxazole » désigne le PBO ou Zylon ;
- le « poly(téréphtalate d'éthylène) » désigne le PET.

De plus, dans le cadre de la présente invention, sauf mention contraire, les proportions exprimées en % correspondent à des pourcentages massiques par rapport au poids total de l'entité considérée.

De préférence, la présente invention a pour objet une composition cimentaire telle que définie précédemment dans laquelle les caractéristiques suivantes sont choisies seules ou en combinaison :
- le ciment est choisi comme étant un CEM I ou un CEM Il A ou B ; de préférence encore un CEM II A ou B ; de façon tout à fait préférée un CEM II A tel qu'un ciment CEM II/A-LL 52.5 N;
- la composition cimentaire comprend de 25% à 60% en poids de latex par rapport au poids de ciment ; de préférence de 25% à 50% en poids de latex par rapport au poids de ciment; de façon tout à fait préférée, de 30% à 50% en poids de latex par rapport au poids de ciment ;
- la composition cimentaire comprend de 0,5% à 3% en poids de fibre par rapport au poids de ciment ; de préférence encore de 0,6% à 1,9% en poids de fibre par rapport au poids de ciment ; de préférence encore de 0,7% à 1,5% en poids de fibre par rapport au poids de ciment ; de façon tout à fait préférée 1% en poids de fibre par rapport au poids de ciment ;
- les fibres contenues dans la composition cimentaire ont une longueur inférieure ou égale à 5 mm; de préférence inférieure ou également 3 mm; de préférence encore inférieure ou égale à 2,5 mm ;
- la fibre contenue dans la composition cimentaire est une fibre végétale ; et/ou
- la fibre végétale est choisie comme étant une fibre de cellulose.

La composition cimentaire selon la présente invention peut également comprendre tout autre additif classiquement utilisé et connu de l'homme du métier. La composition cimentaire selon la présente invention peut par exemple également comprendre du gypse, d'anhydrite ou d'hémihydrate. La présente invention concerne donc également une composition cimentaire telle que décrite précédemment comprenant également un ajout de gypse, d'anhydrite ou d'hémihydrate.

La composition cimentaire selon la présente invention peut également comprendre des ajouts du même type que ceux utilisés pour le ciment Portland tels que par exemple le calcaire, les pouzzolanes naturelles et artificielles, le laitier de haut fourneau, les cendres volantes de foyers au charbon et les fumées de silice. Cet ajout est réalisé par mélange avant ou après le broyage des constituants, par mélange des poudres ou par cobroyage.

La composition cimentaire selon la présente invention peut être préparée selon toute méthode connue de l'homme du métier. A titre d'exemple, on peut notamment citer un procédé de préparation d'une composition cimentaire telle que définie précédemment, comprenant les étapes suivantes :
- on mélange au moins 10% en poids de l'eau totale et la fibre ;
- on ajoute audit mélange le ciment, le reste du sable, le latex et éventuellement 50% en poids du plastifiant ou superplastifiant dilué dans au moins 45% en poids du reste de l'eau ;
- puis on ajoute audit mélange le reste des ingrédients.

La composition cimentaire selon la présente invention peut être utilisée seule ou pour préparer un matériau de construction possédant une meilleure ductilité. Ainsi, la présente invention a également pour objet matériau de construction, notamment un coulis, un mortier ou un béton, comprenant la composition cimentaire telle que décrite précédemment.

Le matériau de construction selon la présente invention peut également contenir tout additif classiquement utilisé et connue de l'homme du métier.
Ainsi, la présente invention a également pour objet un matériau, en particulier un béton ou un mortier, tel que décrit précédemment comprenant également un ou plusieurs des additifs suivants :
- un plastifiant ou superplastifiant. Comme exemple de plastifiant ou de superplastifiant, on peut notamment citer les plastifiants ou superplastifiants synthétiques tels que les polycarboxylates ou les plastifiants ou superplastifiants naturels tels que la caseïne ;
- un accélérateur de prise. Comme exemple d'accélérateur de prise, on peut notamment citer le chlorure de calcium, le formiate de calcium, les sels alcalins ou les germes de C-S-H;
- un retardateur ou retardant. Comme exemple de retardateur ou retardant, on peut citer notamment les lignosulfonates ;
- un rétenteur d'eau. Comme exemple de rétenteur d'eau, on peut notamment citer les éthers de cellulose ou les éthers de guar ;
- un entraineur d'air. Comme exemple d'entraineur d'air, on peut notamment citer les sels d'éthanolamine ;
- un hydrofuge de masse. Comme hydrofuge de masse, on peut notamment citer les silanes ; et/ou
- une résine polymère. Comme résine polymère, on peut notamment citer les résines époxy.

La composition cimentaire selon l'invention et les compositions de coulis, mortier ou béton selon l'invention peuvent être utilisées pour préparer des objets ou des ouvrages aussi variés que :
- des objets de petites dimensions tels que des accessoires pour la cuisine (couteau, dessous de plat...), la salle de bain (porte-savon...), le bureau (crayon, pot à crayons, souris d'ordinateur...), le design ou la décoration intérieure et extérieure (vase, caisson de haut-parleurs...) ;
- des éléments d'aménagement urbain tels que des dalles de jardin ou des revêtements pour place de jeux pour les enfants ;
- des éléments pour application dans les constructions de génie civil ou d'infrastructure avec la construction des routes et la construction ferroviaire tels que les ouvrages d'art ou les ponts ou les ouvrages antisismiques ou les traverses de chemin de fer.

La présente invention peut être illustrée de manière non limitative par les exemples suivants.

### Exemple 1- Compositions cimentaires 1 à 4

Les compositions cimentaires 1 à 4 ont été préparées par un mélange intime des différents constituants dans les proportions rapportées dans le tableau 1 suivant.

**Tableau 1**

| | **Ciment *CEM II*/*A-LL 52.5 N$ de VIGIER*** | | **Latex *VINNAPAS 5025 L de WACKER*** | | **Fibre végétale *Fibres de cellulose D5 de HERCULES*** | |
|---|---|---|---|---|---|---|
| | ***Poids (en g)*** | **% (en poids de ciment)** | ***Poids (en g)*** | **% (en poids de ciment)** | ***Poids (en g)*** | **% (en poids de ciment)** |
| **Composition cimentaire 1** | 1298 | - | 389 | 30% | 13 | 1% |
| **Composition cimentaire 2** | 1317 | - | 395 | 30% | 0 | 0% |
| **Composition cimentaire 3** | 1356 | - | 271 | 20% | 14 | 1% |
| **Composition cimentaire 4** | 1245 | - | 498 | 40% | 12 | 1% |

### Exemple 2 - Mortiers 1 à 4

Les compositions cimentaires 1 à 4 précédentes ont été utilisées afin de préparer respectivement les compositions de mortier 1 à 4 rapportées dans le tableau 2 suivant.

Les mortiers 1 à 4 ont été préparés selon le procédé suivant :
- mélange de 20% en poids du sable, de 10% en poids de l'eau totale et de la fibre ;
- ajout audit mélange du ciment, du reste du sable, du latex et de 50% en poids du plastifiant ou superplastifiant dilué dans 45% en poids du reste de l'eau ;
- puis ajout audit mélange du reste des ingrédients.

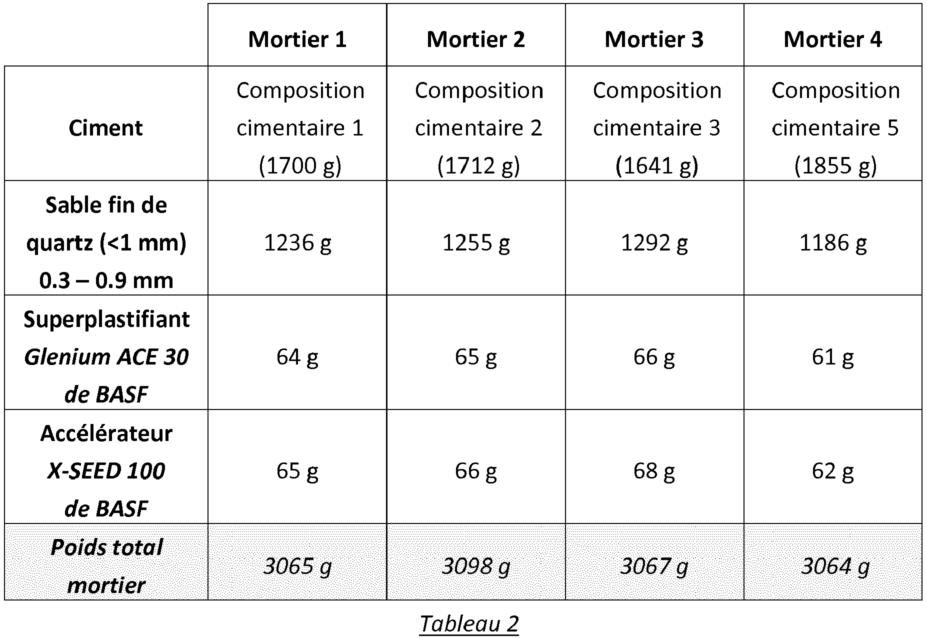

### Exemple 3 - Evaluation des performances des mortiers 1 à 4

Les mortiers 1 à 4 précédents sont mélangés avec de l'eau selon les proportions rapportées dans le tableau 3 suivant.

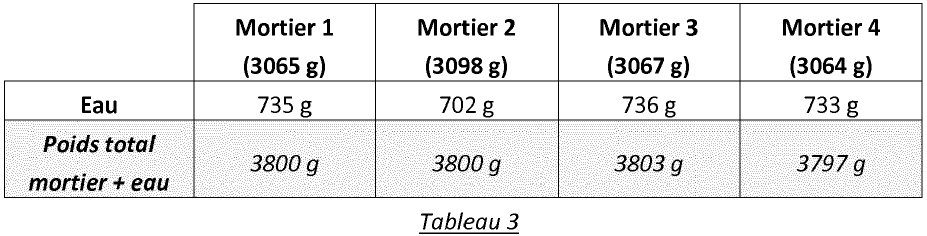

### Etalement

Les propriétés d'étalement des mortiers ont été mesurées selon un dispositif inspiré de celui de la norme EN 12350-1 à 12350-12 et réduit en taille de 50% pour s'adapter à la granulométrie des mortiers plus faible que celle des bétons.

Les résultats des mesures d'étalement sont rapportés dans le Tableau 4 suivant.

**Tableau 4**

| | **Mortier 1** | **Mortier 2** | **Mortier 3** | **Mortier 4** |
|---|---|---|---|---|
| **Étalement (en mm)** | 385 | 430 | 385 | 370 |

### Durée d'ouvrabilité

La durée d'ouvrabilité a été mesurée en répétant le test d'étalement à différents intervalles de temps depuis le premier test d'étalement (temps initial). L'ouvrabilité est définie comme le maintien dans le temps des propriétés d'étalement, c'est-à-dire la durée pendant laquelle si l'on procède à un test d'étalement sur un mortier alors la valeur d'étalement est la même que celle du premier test d'étalement du même mortier rapportée dans le Tableau 4.

**Tableau 5**

| | **Mortier 1** | **Mortier 2** | **Mortier 3** | **Mortier 4** |
|---|---|---|---|---|
| **Ouvrabilité** | > 45 min | > 45 min | > 45 min | > 45 min |

### Résistance à la flexion

Des éprouvettes de mortier 4x4x16 cm ont été produites et testées en résistance à la flexion selon la norme EN 196-1:2005.

Les résultats des mesures de la résistance en flexion (Rf) sont rapportés dans le Tableau 7 suivant.

**Tableau 6**

| | **Mortier 1** | **Mortier 2** | **Mortier 3** | **Mortier 4** |
|---|---|---|---|---|
| **Rf 2 jours (en MPa)** | 2,20 | 2,20 | 3,40 | 2,00 |
| **Rf 7 jours (en MPa)** | 4,40 | 3,60 | 5,90 | 3,60 |
| **Rf 28 jours (en MPa)** | 5,90 | 4,50 | 8,00 | 5,00 |

### Résistance aux chocs (ductilité)

Des éprouvettes de mortier de forme cylindrique de diamètre 20 mm et de longueur 180 mm ont été coulées. Le test de résistance aux chocs (ductilité) consiste à faire tomber ces éprouvettes cylindriques au-dessus une surface plate dure (en métal ou en béton) depuis une hauteur 200 cm. Une série d'éprouvettes a été testée en position de départ horizontale (« chute horizontale ») et une autre série d'éprouvettes a été testée en position de départ verticale (« chute verticale »).

Les résultats des mesures de la résistance aux chocs (ductilité) sont rapportés dans le Tableau 8 suivant.

**Tableau 7**

| | | **Mortier 1** | **Mortier 2** | **Mortier 3** | **Mortier 4** |
|---|---|---|---|---|---|
| **7 jours** | *Chute verticale* | Intact | Intact | Fissures | Intact |
| | *Chute horizontale* | Intact | Rupture (2 morceaux) | Rupture (2 morceaux) + fissures | Intact |
| **28 jours** | *Chute verticale* | Intact | Intact | Intact | Intact |
| | *Chute horizontale* | Intact | Rupture (2 morceaux) | Rupture (3 morceaux) | - |

En outre, la résistance aux chocs (ductilité) de mortiers dits « standards » (mortiers A & B suivants - Tableau 8) a également été mesurée, les résultats étant rapportés dans le tableau 9 suivant.

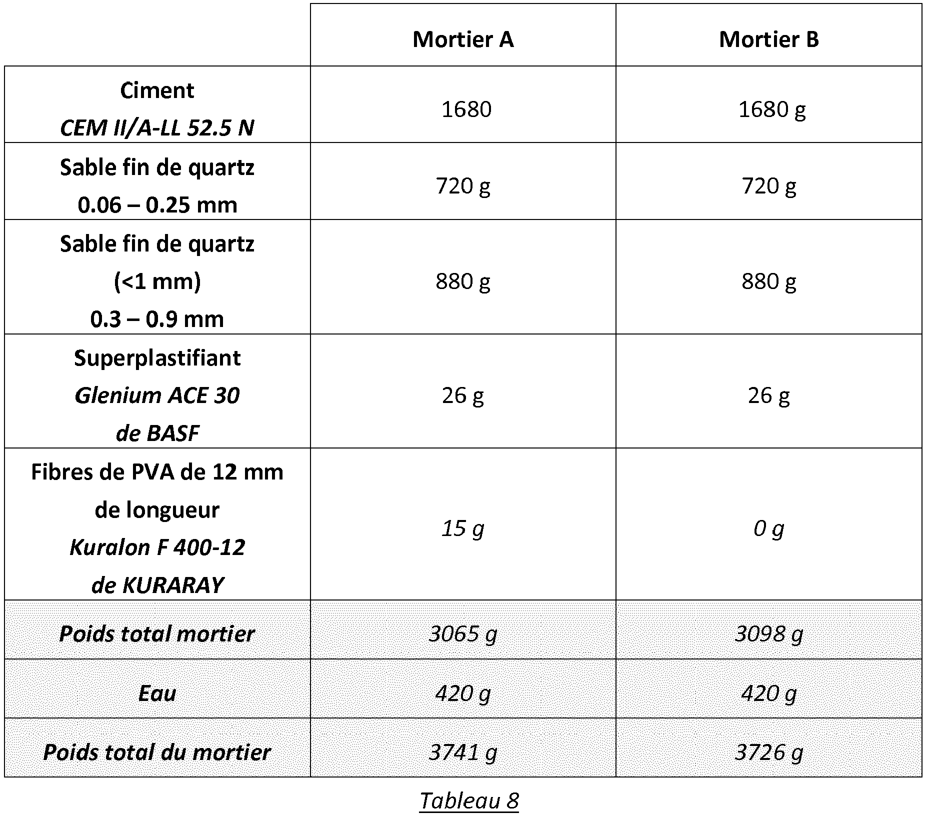

**Tableau 9**

| | | **Mortier A** | **Mortier B** |
|---|---|---|---|
| **7 jours** | *Chute verticale* | Rupture (2 morceaux) | Rupture (2 morceaux) |
| | *Chute horizontale* | Fissures | Rupture (4 morceaux) |
| **28 jours** | *Chute verticale* | Rupture (2 morceaux) | Rupture (2 morceaux) |
| | *Chute horizontale* | Fissures | Rupture (4 morceaux) |

### Mise en oeuvre des mortiers de l'invention dans des géométries fines et étroites

Les mortiers 1, A et B ont été coulés dans une section de demi-cylindre de rayon de 6 mm.

La mise en oeuvre a été évaluée en observant après démoulage des objets si le moule a été bien rempli par le mortier, c'est-à-dire si l'objet final est entier et avec une surface avec aucun vide d'air (mise en oeuvre qualifiée de «Très bonne »), ou entier mais comporte quelques vides d'air (mise en oeuvre qualifiée de « Bonne », ou partiellement entier avec plus de 50% du volume moule rempli par le mortier (mise en oeuvre « Mauvaise »)., ou pas entier du tout avec moins de 50% du volume moule rempli par le mortier (mise en oeuvre « Très mauvaise »).

Les résultats de mise en oeuvre sont rapportés dans le Tableau 10 suivant.

**Tableau 10**

| | **Mortier 1** | **Mortier A** | **Mortier B** |
|---|---|---|---|
| **Mise en oeuvre dans des géométries fines et étroites** | Très bonne | Très mauvaise | Bonne |

### Conclusion

La composition de mortier 3 contenant 20% de latex (en poids par rapport au poids de ciment) ne possède pas une ductilité suffisante (mauvaise résistance aux chocs).

La composition de mortier 2 contenant 30% de latex (en poids par rapport au poids de ciment) possède une ductilité améliorée par rapport au mortier 3, mais sa résistance à la flexion à moyen et long termes est altérée.

Les compositions de mortier 1 et 4 qui contiennent au moins 30% de latex et 1% de fibres végétales (en poids par rapport au poids de ciment), possèdent non seulement une ductilité nettement améliorée (meilleures résistances aux chocs) par rapport au mortier 3 sans que les propriétés mécaniques résistances ne soient détériorées de façon significative à court, moyen ou long terme.

Enfin, la composition de mortier 1 qui contient 30% de latex et 1% de fibres végétales (en poids par rapport au poids de ciment) présente en outre :
- une ductilité (résistance aux chocs) comparable voire meilleure que celle des BFUP (et bien sûr meilleure que celle du mortier dans fibre de polypropylène) ;
- une mise en oeuvre dans des géométries fines et étroites meilleure que celle des BFUP;
- tout en assurant une esthétique de béton mat et non brillant.

## Revendications

1. Composition cimentaire comprenant :
- du ciment ;
- plus de 20% en poids de latex par rapport au poids de ciment ; et
- de 0,4% à 4% en poids de fibre par rapport au poids de ciment, ladite fibre étant choisie parmi les fibres végétales, les fibres de carbone, les fibres de poly(p-phénylènetéréphtalamide), les fibres p-phénylène-2,6-benzobisoxazole, les fibres de caoutchouc, les fibres de nylon, les fibres de poly(téréphtalate d'éthylène) et/ou les fibres de polystyrène.

2. Composition cimentaire selon la revendication 1, **caractérisée en ce que** le ciment est choisi comme étant un CEM I ou un CEM II A ou B.

3. Composition cimentaire selon la revendication 1 ou 2, **caractérisée en ce qu'**elle comprend de 25% à 60% en poids de latex par rapport au poids de ciment.

4. Composition cimentaire selon l'une quelconque des revendications 1 à 3, **caractérisée en ce que** la fibre est une fibre végétale.

5. Composition cimentaire selon la revendication 4, **caractérisée en ce que** la fibre végétale est choisie comme étant une fibre de cellulose.

6. Composition selon l'une quelconque des revendications 1 à 5, **caractérisée en ce que** le latex est un liant polymère redispersible à base d'un homopolymère, d'un copolymère ou d'une combinaison de copolymère(s) et/ou d'homopolymère(s) choisi(s) parmi un copolymère d'acétate de vinyle et d'éthylène ; un copolymère butadiène-acrylonitrile ; un homopolymère d'acétate de vinyle ; un copolymère d'acétate de vinyle et de versatate de vinyle ; un copolymère d'acétate de vinyle, de versatate de vinyle et d'éthylène ; un copolymère acrylate ; un copolymère d'acétate de vinyle, de versatate de vinyle, d'éthylène et d'acrylate de butyle ; un copolymère de chlorure de vinyle et d'éthylène ; un copolymère d'ester de vinyle, d'éthylène et de méthyl-méthacrylate ; un copolymère d'acétate de vinyle, d'éthylène et d'ester de vinyle ; un copolymère d'ester de vinyle, d'éthylène et d'ester d'acide acrylique ; un copolymère de chlorure de vinyle, d'éthylène et d'acide laurique (laurate) de vinyle ; et un copolymère d'acétate de vinyle, de chlorure de vinyle et d'éthylène.

7. Matériau de construction comprenant une composition cimentaire selon l'une quelconque des revendications 1 à 6.

8. Matériau de construction selon la revendication 7, **caractérisé en ce que** ledit matériau de construction est un mortier ou un béton.

9. Matériau de construction selon la revendication 7 ou 8, **caractérisé en ce qu'**il comprend également un superplastifiant.

10. Matériau de construction selon l'une quelconque des revendications 7 à 9, **caractérisé en ce qu'**il comprend également un accélérateur de prise.

## Patentansprüche

1. Zementartige Zusammensetzung, umfassend:
- Zement;
- mehr als 20 Gewichts-% Latex in Bezug auf das Zementgewicht; und
- 0,4 Gewichts-% bis 4 Gewichts-% Faser in Bezug auf das Zementgewicht, wobei die Faser ausgewählt ist aus Pflanzenfasern, Kohlenstofffasern, Poly(p-phenylenterephthalamid)-Fasern, p-Phenylen-2,6-benzobisoxazol-Fasern, Kautschukfasern, Nylonfasern, Poly(ethylenterephthalat)-Fasern und/oder Polystyrolfasern.

2. Zementartige Zusammensetzung nach Anspruch 1, **dadurch gekennzeichnet, dass** der Zement so ausgewählt ist, dass er ein CEM I oder ein CEM II A oder B ist.

3. Zementartige Zusammensetzung nach Anspruch 1 oder 2, **dadurch gekennzeichnet, dass** sie 25 Gewichts-% bis 60 Gewichts-% Latex in Bezug auf das Zementgewicht umfasst.

4. Zementartige Zusammensetzung nach einem der Ansprüche 1 bis 3, **dadurch gekennzeichnet, dass** die Faser eine Pflanzenfaser ist.

5. Zementartige Zusammensetzung nach Anspruch 4, **dadurch gekennzeichnet, dass** die Pflanzenfaser so ausgewählt ist, dass sie eine Zellulosefaser ist.

6. Zusammensetzung nach einem der Ansprüche 1 bis 5, **dadurch gekennzeichnet, dass** der Latex ein redispergierbares polymeres Bindemittel auf Basis eines Homopolymers, eines Copolymers oder eine Kombination von Copolymer(en) und/oder Homopolymer(en) ist, ausgewählt aus einem EthylenVinylacetat-Copolymer; einem Acrylnitril-Butadien-Copolymer; einem Vinylacetat-Homopolymer; einem Vinylversatat-Vinylacetat-Copolymer; einem Ethylen-Vinylversatat-Vinylacetat-Copolymer; einem Acrylat-Copolymer; einem Ethylen-Butylacrylat-Vinylversatat-Vinylacetat-Copolymer; einem Ethylen-Vinylchlorid-Copolymer; einem Ethylen-Methylmethacrylat-Vinylester-Copolymer; einem Ethylen-Vinylester-Vinylacetat-Copolymer; einem Ethylen-Acrylsäureester-Vinylester-Copolymer; einem Ethylen-Vinyllaurat (Laurinsäure)-Vinylchlorid-Copolymer; und einem Ethylen-Vinylchlorid-Vinylacetat-Copolymer.

7. Baumaterial, das eine zementartige Zusammensetzung nach einem der Ansprüche 1 bis 6 umfasst.

8. Baumaterial nach Anspruch 7, **dadurch gekennzeichnet, dass** das Baumaterial ein Mörtel oder ein Beton ist.

9. Baumaterial nach Anspruch 7 oder 8, **dadurch gekennzeichnet, dass** es ebenfalls einen Superweichmacher umfasst.

10. Baumaterial nach einem der Ansprüche 7 bis 9, **dadurch gekennzeichnet, dass** es ebenfalls einen Abbindebeschleuniger umfasst.

## Claims

1. A cementitious composition comprising:
- cement;
- more than 20 weight% of latex with respect to the cement weight; and
- from 0.4 to 4 weight% of fiber with respect to the cement weight, said fiber being selected from vegetal fibers, carbon fibers, poly-paraphenylene terephthalamide fibers, p-phenylene-2,6-benzobisoxazole fibers, rubber fibers, nylon fibers, polyethylene terephthalate fibers and/or polystyrene fibers.

2. The cementitious composition according to claim 1, **characterized in that** the cement is selected as being a CEM I or a CEM II A or B.

3. The cementitious composition according to claim 1 or 2, **characterized in that** it comprises from 25 to 60 weight% of latex with respect to the cement weight.

4. The cementitious composition according to any one of claims 1 to 3, **characterized in that** the fiber is a vegetal fiber.

5. The cementitious composition according to claim 4, **characterized in that** the vegetal fiber is selected as being a cellulose fiber.

6. The cementitious composition according to any one of claims 1 to 5, **characterized in that** the latex is a redispersible polymer binder based on a homopolymer, a copolymer or a combination of copolymer(s) and/or of homopolymer(s) selected from a copolymer of vinyl acetate and ethylene; a butadiene-acrylonitrile copolymer; a vinyl acetate homopolymer; a copolymer of vinyl acetate and vinyl versatate; a copolymer of vinyl acetate, vinyl versatate and ethylene; an acrylate copolymer; a copolymer of vinyl acetate, vinyl versatate, ethylene and butyl acrylate; a copolymer of vinyl chloride and ethylene; a copolymer of vinyl ester, ethylene and methyl-methacrylate; a copolymer of vinyl acetate, ethylene and vinyl ester; a copolymer of vinyl ester, ethylene and acrylic acid ester; a copolymer of vinyl chloride, ethylene and vinyl lauric acid (laurate); and a copolymer of vinyl acetate, vinyl chloride and ethylene.

7. A construction material comprising a cementitious composition according to any one of claims 1 to 6.

8. The construction material according to claim 7, **characterized in that** said construction material is a mortar or a concrete.

9. The construction material according to claim 7 or 8, **characterized in that** it also comprises a superplasticizer.

10. The construction material according to any one of claims 7 to 9, **characterized in that** it also comprises a set accelerator.
